# EUROPEAN PATENT APPLICATION

(11) **EP 4 712 195 A1**
(43) Date of publication of application: **18.03.2026**
(21) Application number: 25774890.5
(22) Date of filing: 07.03.2025
(51) Int. Cl.: H01M 10/0585, H01M 10/42, H01M 50/593, H01M 50/595, H01M 50/586, H01M 10/052, H01M 50/105, H01M 50/124, H01M 50/30

(54) **ELECTRODE ASSEMBLY WITH INSULATING TAPE ATTACHED AND LITHIUM SECONDARY BATTERY INCLUDING SAME**

(30) Priority: 19.03.2024 KR 20240038034; 24.05.2024 KR 20240067483
(71) Applicant: LG Energy Solution, Ltd., Seoul 07335 (KR)
(72) Inventor: SON, Ju Hwan, Daejeon 34122 (KR)
(74) Representative: Plasseraud IP
(86) International application number: PCT/KR2025/003030
(87) International publication number: WO 2025/198228

(57) **Abstract**

Disclosed are an electrode assembly having an insulating tape attached thereto, the electrode assembly including an electrode stack constituted by a plurality of positive electrodes and a plurality of negative electrodes stacked alternately with a separator disposed therebetween, a positive electrode lead coupled to a positive electrode tab bundle constituted by positive electrode tabs protruding respectively from outer peripheries of the plurality of positive electrodes and overlapping each other, a negative electrode lead coupled to a negative electrode tab bundle constituted by negative electrode tabs protruding respectively from outer peripheries of the plurality of negative electrodes and overlapping each other, a first insulating tape attached to at least a part of an upper surface of the electrode stack, to an upper surface of a positive electrode coupling portion where the positive electrode tab bundle and the positive electrode lead are coupled to each other, and to an upper surface of a negative electrode coupling portion where the negative electrode tab bundle and the negative electrode lead are coupled to each other, and a second insulating tape attached to at least a part of a lower surface of the electrode stack, to a lower surface of the positive electrode coupling portion where the positive electrode tab bundle and the positive electrode lead are coupled to each other, and to a lower surface of the negative electrode coupling portion where the negative electrode tab bundle and the negative electrode lead are coupled to each other, wherein the positive electrode tab bundle and the negative electrode tab bundle are formed at the same outer periphery so as to be spaced apart from each other, and at least one of the first insulating tape and the second insulating tape includes a cut-out portion formed such that at least a part between a positive electrode portion attached to the positive electrode coupling portion and a negative electrode portion attached to the negative electrode coupling portion is removed, and a lithium secondary battery including the same.

## Description

### [Technical Field]

This application claims the benefit of priority to Korean Patent Application No. 10-2024-0038034 filed on March 19, 2024 and Korean Patent Application No. 10-2024-0067483 filed on May 24, 2024, the disclosure of which is incorporated herein by reference in its entirety.

The present invention relates to an electrode assembly having an insulating tape attached thereto and a lithium secondary battery including the same. More particularly, the present invention relates to an electrode assembly having an insulating tape attached to each of upper and lower parts of a tab-lead coupling portion in a pouch-shaped battery cell, wherein the insulating tape is modified to prevent the insulating tape from affecting gas emission due to fusion thereof and a lithium secondary battery including the same.

### [Background Art]

For a stacked type electrode assembly including a positive electrode, a negative electrode, and a separator located on an outer surface of at least one of the positive and negative electrodes, wherein the positive and negative electrodes are alternately stacked, at least one positive electrode tab and at least one negative electrode tab protrude respectively from outer peripheries of all positive electrodes and all negative electrodes on at least one side of each thereof.

For a pouch-shaped battery cell configured such that the stacked type electrode assembly is received in a pouch-shaped battery case, positive electrode tabs protruding from all of the positive electrodes are coupled so as to overlap each other to form a positive electrode tab bundle, and negative electrode tabs protruding from all of the negative electrodes are coupled so as to overlap each other to form a negative electrode tab bundle.

The positive electrode tab bundle is coupled to a positive electrode lead, and the negative electrode tab bundle is coupled to a negative electrode lead, wherein the positive electrode lead and the negative electrode lead protrude out of the pouch-shaped battery case to serve as electrode terminals.

Each of the positive electrode tab bundle and the negative electrode tab bundle is bent so as to have a V shape in the pouch-shaped battery case in a state of being coupled to a corresponding one of the positive electrode lead and the negative electrode lead, and the part thus bent is referred to as a "V-forming portion".

If a pointedly bent part of the V-forming portion comes into contact with a conductive metal layer of the pouch-shaped battery case, there is a risk of internal short circuit.

In order to prevent contact between the V-forming portion and the conductive metal layer of the pouch-shaped battery case, therefore, an insulating tape is attached to an outer surface of the V-forming portion.

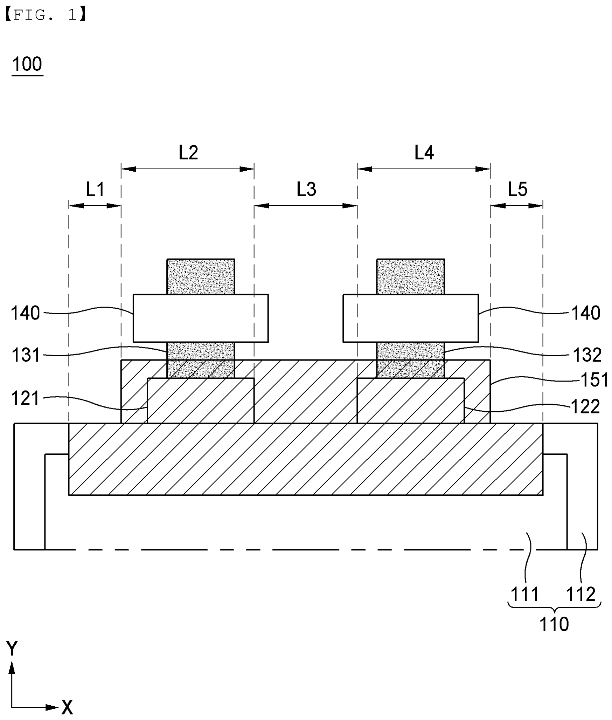

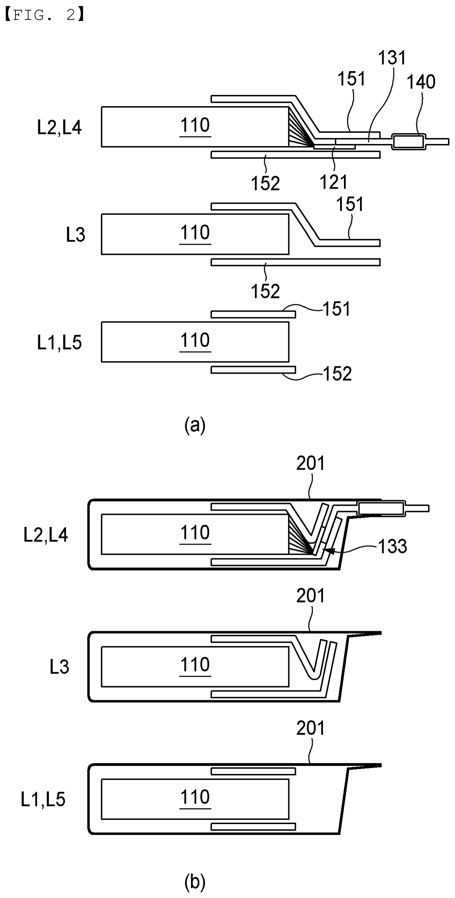

In this regard, FIG. 1 is a plan view of a conventional electrode assembly, and FIG. 2 is a vertical sectional view of the electrode assembly of FIG. 1 and a pouch-shaped battery cell including the same.

Referring to FIG. 1 and FIG. 2, the electrode assembly 100 includes an electrode stack 110 configured such that a positive electrode 111 and a negative electrode (not shown) are stacked in the state in which a separator 112 is interposed therebetween, wherein the negative electrode is located opposite the positive electrode 111 with respect to the separator 112 and has a smaller area than the separator 112, and therefore the negative electrode is omitted from FIG. 1.

A plurality of positive electrode tabs 121 protruding from the positive electrode 111 forms a positive electrode tab bundle, and an end of the positive electrode tab bundle is coupled to a positive electrode lead 131. A plurality of negative electrode tabs 122 protruding from the negative electrode forms a negative electrode tab bundle, and an end of the negative electrode tab bundle is coupled to a negative electrode lead 132. A pair of lead films 140 is attached to an upper surface and a lower surface of each of the positive electrode lead 131 and the negative electrode lead 132.

A first insulating tape 151 is attached to an upper surface of an upper end of the electrode stack 110 in a longitudinal direction Y, an upper surface of the positive electrode tab 121, and an upper surface of the negative electrode tab 122, and a second insulating tape 152 is attached to a lower surface of the upper end of the electrode stack 110 in the longitudinal direction Y, a lower surface of the positive electrode tab 121, and a lower surface of the negative electrode tab 122.

In FIG. 1, the electrode assembly is divided into L1, L2, L3, L4, and L5 in a width direction X. (a) of FIG. 2 is a vertical sectional view of the electrode assembly cut parallel to the longitudinal direction Y of the electrode assembly at each of L1, L2, L3, L4, and L5. (b) of FIG. 2 shows that, in the electrode assembly of (a) of FIG. 2, the electrode tab bundle is bent to form a V-forming portion 133 and is received in a pouch-shaped battery case 201 in a bent state.

The vertical sectional views of L1 and L5 are the same, and each of (a) of FIG. 2 and (b) of FIG. 2 is a vertical sectional view of L1. The vertical sectional views of L2 and L4 are the same except that the electrodes have different polarities, and each of (a) of FIG. 2 and (b) of FIG. 2 is a vertical sectional view of L2.

The first insulating tape 151 is attached so as to cover an upper part of L3, and the second insulating tape 152 is attached to cover a lower part of L3.

Each of the first insulating tape 151 and the second insulating tape 152 may be a cast polypropylene (hereinafter referred to as "CPP") tape, wherein the melting point of CPP is 160°C.

Referring to FIG. 2, at L3 of (a), the first insulating tape 151 and the second insulating tape 152 are not attached to each other, but at L3 of (b), the first insulating tape 151 and the second insulating tape 152 become closer to each other while forming the V-forming portion 133. At this time, the first insulating tape 151 and the second insulating tape 152 may be attached.

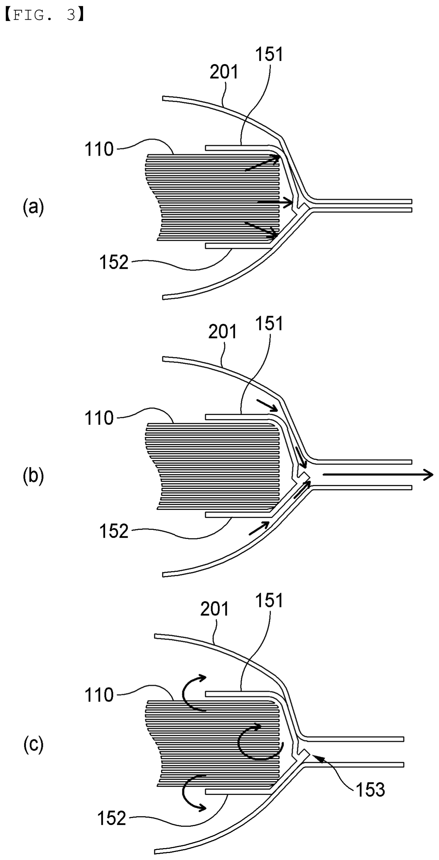

FIG. 3 is a vertical sectional view showing that the pouch-shaped battery case swells when the internal pressure of the pouch-shaped battery cell of FIG. 2 increases. FIG. 3 is a vertical sectional view of L3 of FIG. 2, wherein the electrode tabs, electrode leads, and lead films are omitted for ease of description.

Referring to FIG. 3, (a) shows the state in which the pouch-shaped battery case 201 is expanded by gas generated during charging and discharging of a lithium secondary battery, wherein bold arrows indicate a gas expansion direction. (b) shows that the temperature of the lithium secondary battery has increased to the temperature at which an inner adhesive layer of the pouch-shaped battery case 201 melts or higher and venting has started, wherein the temperature is about 130 °C or higher. Bold arrows indicate the flow of gas, and the gas in the pouch-shaped battery case is discharged to the outside through a venting portion. (c) shows the state in which the temperature of the lithium secondary battery has increased to 160 °C or higher and the first insulating tape 151 and the second insulating tape 152 have melted to form a fused portion 153. The fused first insulating tape 151 and second insulating tape 152 block the venting portion of the pouch-shaped battery case 201 through which the gas is discharged in (b), whereby the gas cannot be discharged and gradually accumulates in the pouch-shaped battery case 201. Bold arrows indicate the flow of gas.

In this situation, the pouch-shaped battery case 201 that cannot withstand the internal pressure may explode, which is pointed out to be a problem that threatens the safety of a user who uses the lithium secondary battery.

Therefore, even if the insulating tape is attached in order to prevent the pouch-shaped battery case from being damaged by the V-forming portion of the electrode tab bundle, there is a need for technology that improves safety by allowing gas to be discharged smoothly when the internal pressure of the battery cell increases.

### [Disclosure]

### [Technical Problem]

The present invention has been made in view of the above problems, and it is an object of the present invention to provide an electrode assembly having an insulating tape attached thereto capable of securing a gas discharge passage to prevent a thermal runaway phenomenon and explosion of the battery cell even if the insulating tape is attached in order to prevent a pouch-shaped battery case from being damaged by a V-forming portion of an electrode tab bundle and internal short circuit from occurring and a lithium secondary battery including the same.

### [Technical Solution]

An electrode assembly according to the present invention to accomplish the above object includes an electrode stack constituted by a plurality of positive electrodes and a plurality of negative electrodes stacked alternately with a separator disposed therebetween, a positive electrode lead coupled to a positive electrode tab bundle constituted by positive electrode tabs protruding respectively from outer peripheries of the plurality of positive electrodes and overlapping each other, a negative electrode lead coupled to a negative electrode tab bundle constituted by negative electrode tabs protruding respectively from outer peripheries of the plurality of negative electrodes and overlapping each other, a first insulating tape attached to at least a part of an upper surface of the electrode stack, to an upper surface of a positive electrode coupling portion where the positive electrode tab bundle and the positive electrode lead are coupled to each other, and to an upper surface of a negative electrode coupling portion where the negative electrode tab bundle and the negative electrode lead are coupled to each other, and a second insulating tape attached to at least a part of a lower surface of the electrode stack, to a lower surface of the positive electrode coupling portion where the positive electrode tab bundle and the positive electrode lead are coupled to each other, and to a lower surface of the negative electrode coupling portion where the negative electrode tab bundle and the negative electrode lead are coupled to each other, wherein the positive electrode tab bundle and the negative electrode tab bundle are formed at the same outer periphery so as to be spaced apart from each other, and at least one of the first insulating tape and the second insulating tape includes a cut-out portion formed such that at least a part between a positive electrode portion attached to the positive electrode coupling portion and a negative electrode portion attached to the negative electrode coupling portion is removed.

The cut-out portion may include a first cut-out portion formed in the first insulating tape and a second cut-out portion formed in the second insulating tape.

The cut-out portion may be formed in any one selected from the group consisting of a rectangular shape, a square shape, a triangular shape, a trapezoidal shape, a semicircular shape, or a semi-elliptical shape in plan.

The width of the positive electrode portion of each of the first insulating tape and the second insulating tape may be greater than the width of the positive electrode tab, and the width of the negative electrode portion of each of the first insulating tape and the second insulating tape may be greater than the width of the negative electrode tab.

Each of the first insulating tape and the second insulating tape may include a first region attached to an outer surface of the electrode stack and a second region including the positive electrode portion and the negative electrode portion as the remaining part excluding the first region, and the first region may include an extension portion extending beyond both ends of the second region in a width direction of the electrode stack.

The shortest distance from a first end of the first region in a longitudinal direction to the cut-out portion may be equal to the distance from a first end of the extension portion in the longitudinal direction to a second end of the extension portion opposite the first end of the extension portion.

An extension portion of the first insulating tape may extend downward along a side surface of the electrode stack in a thickness direction, an extension portion of the second insulating tape may extend upward along the side surface of the electrode stack in the thickness direction, and the extension portion of the first insulating tape and the extension portion of the second insulating tape may not overlap each other at the side surface of the electrode stack.

An extension portion of the first insulating tape may extend downward along a side surface of the electrode stack in a thickness direction, an extension portion of the second insulating tape may extend upward along the side surface of the electrode stack in the thickness direction, and the extension portion of the first insulating tape and the extension portion of the second insulating tape may overlap each other at the side surface of the electrode stack.

An extension portion of the first insulating tape may pass a side surface of the electrode stack in a thickness direction and extend to a lower surface of the electrode stack, an extension portion of the second insulating tape may pass the side surface of the electrode stack in the thickness direction and extend to an upper surface of the electrode stack, and the extension portion of the first insulating tape and the extension portion of the second insulating tape may overlap each other at the side surface of the electrode stack, the upper surface of the electrode stack, and the lower surface of the electrode stack.

Each of the first insulating tape and the second insulating tape may include a first layer attached to the electrode stack, the positive electrode coupling portion, and the negative electrode coupling portion, and a second layer located on the first layer, the first layer may be an adhesive layer including an adhesive material, and the second layer may be an insulating layer.

In addition, an electrode assembly according to the present invention includes an electrode stack constituted by a plurality of positive electrodes and a plurality of negative electrodes stacked alternately with a separator disposed therebetween, a positive electrode lead coupled to a positive electrode tab bundle constituted by positive electrode tabs protruding respectively from outer peripheries of the plurality of positive electrodes and overlapping each other, a negative electrode lead coupled to a negative electrode tab bundle constituted by negative electrode tabs protruding respectively from outer peripheries of the plurality of negative electrodes and overlapping each other, a first insulating tape attached to at least a part of an upper surface of the electrode stack, to an upper surface of a positive electrode coupling portion where the positive electrode tab bundle and the positive electrode lead are coupled to each other, to an upper surface of a negative electrode coupling portion where the negative electrode tab bundle and the negative electrode lead are coupled to each other, and to a side surface of the electrode stack between the positive electrode coupling portion and the negative electrode coupling portion, and a second insulating tape attached to at least a part of a lower surface of the electrode stack, to a lower surface of the positive electrode coupling portion where the positive electrode tab bundle and the positive electrode lead are coupled to each other, to a lower surface of the negative electrode coupling portion where the negative electrode tab bundle and the negative electrode lead are coupled to each other, and to the side surface of the electrode stack between the positive electrode coupling portion and the negative electrode coupling portion.

The first insulating tape and the second insulating tape may overlap each other at the side surface of the electrode stack between the positive electrode coupling portion and the negative electrode coupling portion.

The present invention provides a lithium secondary battery including the electrode assembly. Specifically, the lithium secondary battery includes the electrode assembly and a battery case configured to receive the electrode assembly therein, wherein the battery case includes a first case and a second case, each of the first case and the second case being made of a laminate sheet including a metal layer and a resin layer, an electrode assembly receiving portion is formed in at least one of the first case and the second case, outer peripheries of the first case and the second case are thermally fused to each other to seal the battery case, and the positive electrode tab bundle and the negative electrode tab bundle of the electrode assembly are bent in a space between the electrode stack and the battery case to form a V-forming portion.

A thicker one of the first insulating tape and the second insulating tape may be attached to the outside of the V-forming portion.

In addition, the present invention provides a battery pack including the lithium secondary battery as a unit cell.

In addition, the present invention may provide various combinations of the above solving means.

### [Advantageous Effects]

In the present invention, an unnecessarily fused part is removed from an insulating tape attached to an outer surface of a V-forming portion of an electrode tab bundle, whereby it is possible to maintain an open state of a venting portion when venting a lithium secondary battery.

This allows internal gas to be discharged smoothly, whereby the temperature of the lithium secondary battery does not increase beyond a certain level.

Consequently, it is possible to prevent a thermal runaway phenomenon and explosion of the lithium secondary battery, and therefore it is possible to prevent secondary incidents, such as loss of life.

In addition, a positive electrode, a separator, and a negative electrode constituting an electrode assembly are in tight contact with each other, thereby reducing the resistance.

### [Description of Drawings]

FIG. 1 is a plan view of a conventional electrode assembly.
FIG. 2 is a vertical sectional view of the electrode assembly of FIG. 1 and a pouch-shaped battery cell including the same.
FIG. 3 is a vertical sectional view showing that a pouch-shaped battery case swells when the internal pressure of the pouch-shaped battery cell of FIG. 2 increases.
FIG. 4 is a plan view of an electrode assembly according to a first embodiment of the present invention.
FIG. 5 is a perspective view of the electrode assembly of FIG. 4.
FIG. 6 is a vertical sectional view of the electrode assembly of FIG. 4 and a pouch-shaped battery cell including the same.
FIG. 7 is a plan view showing various shapes of a cut-out portion in the electrode assembly according to the present invention.
FIG. 8 is a perspective view of an electrode assembly according to a second embodiment of the present invention.
FIG. 9 is a perspective view of an electrode assembly according to a third embodiment of the present invention.
FIG. 10 is a perspective view of an electrode assembly according to a fourth embodiment of the present invention.
FIG. 11 is a perspective view of an electrode assembly according to a fifth embodiment of the present invention.
FIG. 12 is a graph showing temperature change over time of a comparative example.
FIG. 13 is a photograph showing the result of the comparative example.
FIG. 14 is a graph showing temperature change over time of an example.
FIG. 15 is a photograph showing the result of the example.

### [Best Mode]

Now, preferred embodiments of the present invention will be described in detail with reference to the accompanying drawings such that the preferred embodiments of the present invention can be easily implemented by a person having ordinary skill in the art to which the present invention pertains. In describing the principle of operation of the preferred embodiments of the present invention in detail, however, a detailed description of known functions and configurations incorporated herein will be omitted when the same may obscure the subject matter of the present invention.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

A description to embody elements through limitation or addition may be applied to all inventions, unless particularly restricted, and does not limit a specific invention.

In the description of the invention and the claims of the present application, singular forms are intended to include plural forms unless mentioned otherwise.

In the description of the invention and the claims of the present application, "or" includes "and" unless mentioned otherwise. Therefore, "including A or B" means three cases, namely, the case including A, the case including B, and the case including A and B.

Embodiments of the present invention will be described in detail with reference to the drawings.

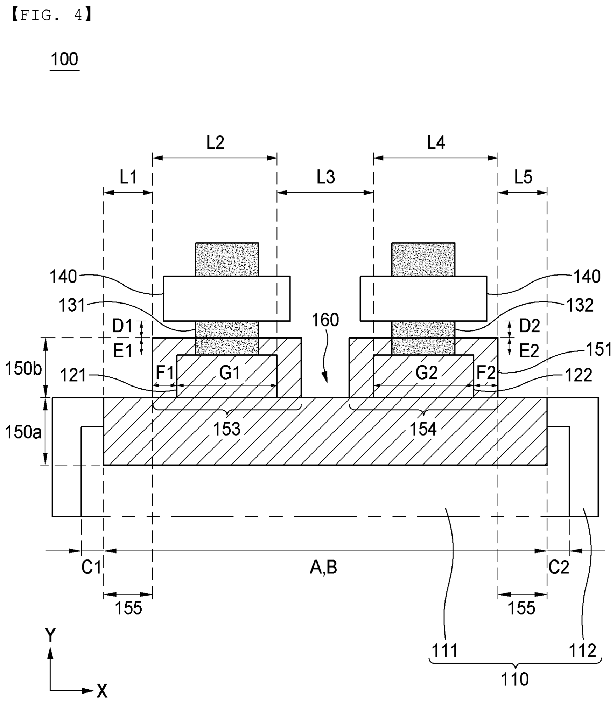

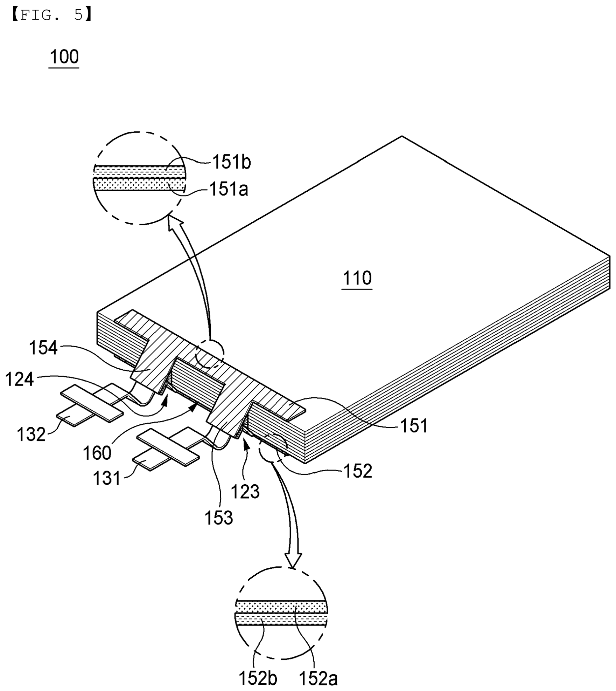

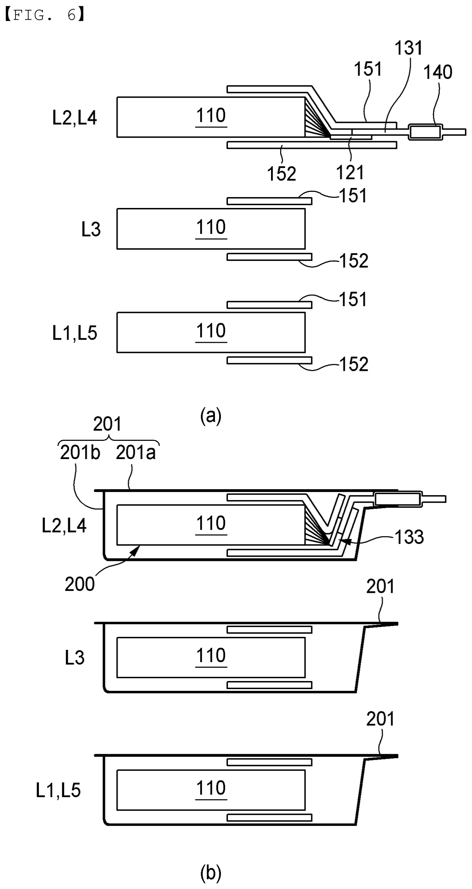

FIG. 4 is a plan view of an electrode assembly according to a first embodiment of the present invention, FIG. 5 is a perspective view of the electrode assembly of FIG. 4, and FIG. 6 is a vertical sectional view of the electrode assembly of FIG. 4 and a pouch-shaped battery cell including the same.

Referring to FIGs. 4 to 6, the electrode assembly 100 according to the present invention includes an electrode stack 110 constituted by a plurality of positive electrodes 111 and a plurality of negative electrodes (not shown) stacked alternately with a separator 112 disposed therebetween, a positive electrode lead 131 coupled to a positive electrode tab bundle constituted by positive electrode tabs 121 protruding respectively from outer peripheries of the plurality of positive electrodes 111 and overlapping each other, a negative electrode lead 132 coupled to a negative electrode tab bundle constituted by negative electrode tabs 122 protruding respectively from outer peripheries of the plurality of negative electrodes and overlapping each other, a first insulating tape 151 attached to at least a part of an upper surface of the electrode stack 110, to an upper surface of a positive electrode coupling portion 123 where the positive electrode tab bundle and the positive electrode lead 131 are coupled to each other, and to an upper surface of a negative electrode coupling portion 124 where the negative electrode tab bundle and the negative electrode lead 132 are coupled to each other, and a second insulating tape 152 attached to at least a part of a lower surface of the electrode stack 110, to a lower surface of the positive electrode coupling portion 123 where the positive electrode tab bundle and the positive electrode lead 131 are coupled to each other, and to a lower surface of the negative electrode coupling portion 124 where the negative electrode tab bundle and the negative electrode lead 132 are coupled to each other.

The first insulating tape 151 and the second insulating tape 152 are attached to an upper end of the electrode stack 110 in a longitudinal direction Y, extend further in a direction toward the positive electrode lead 131 and the negative electrode lead 132, pass the positive electrode tab bundle and the negative electrode tab bundle, and extend to the positive electrode coupling portion 123 and the negative electrode coupling portion 124. However, unlike what is shown in the figures, the first insulating tape 151 and the second insulating tape 152 may extend to a lower part of the electrode stack 110 in the longitudinal direction Y as long as the first insulating tape and the second insulating tape are located at an upper part of the electrode stack in the longitudinal direction Y.

A pair of lead films 140 may be further attached to upper and lower surfaces of each of the positive electrode lead 131 and negative electrode lead 132. The lead films 140 are attached to improve the adhesion of the positive electrode lead 131 and the negative electrode lead 132 to a pouch-shaped battery case, and are disposed at the positions where the lead films overlap an outer peripheral sealed portion of the pouch-shaped battery case after the electrode assembly 100 is received in the pouch-shaped battery case. In other words, the outer periphery of the pouch-shaped battery case is sealed in the state in which the lead films 140 are disposed so as to overlap the outer peripheral sealed portion of the pouch-shaped battery case.

The positive electrode tab bundle and the negative electrode tab bundle are formed at the same side of the outer periphery of the electrode stack 110, but are located so as to be spaced apart from each other.

At least one of the first insulating tape 151 and the second insulating tape 152 includes a cut-out portion 160 formed such that at least a part between a positive electrode portion 153 attached to the positive electrode coupling portion and a negative electrode portion 154 attached to the negative electrode coupling portion is removed.

Comparing the first insulating tape 151 and the second insulating tape 152 according to the present invention with the first insulating tape 151 and the second insulating tape 152 shown in FIG. 1, there is a difference in that at least a part of a portion that covers upper and lower parts of region L3 of FIG. 4 is removed.

In the present invention, not only is at least one of the first insulating tape 151 and the second insulating tape 152 provided with the cut-out portion 160, but also each of the first insulating tape 151 and the second insulating tape 152 is provided with the cut-out portion 160.

In the electrode assembly according to the present invention, the cut-out portion 160 is formed by removing a conventional fused portion that is formed as the result of the first insulating tape and the second insulating tape being melted and thermally fused and blocks a venting portion, whereby gas in the lithium secondary battery may be discharged smoothly.

The first insulating tape 151 and the second insulating tape 152 are attached to outer surfaces of the positive electrode tab bundle and the negative electrode tab bundle to prevent short circuit in the lithium secondary battery, wherein the width of the positive electrode portion 153 of the first insulating tape 151 and the second insulating tape 152 is preferably equal to or greater than the width G1 of the positive electrode tab 121, and the width of the negative electrode portion 154 is preferably equal to or greater than the width G2 of the negative electrode tab 122.

Specifically, as shown in FIG. 4, the minimum size of the first insulating tape 151 and the second insulating tape 152 may be configured as follows in the state in which the first insulating tape 151 and the second insulating tape 152 are attached to the electrode stack 110, the positive electrode tab bundle, the positive electrode coupling portion, the negative electrode tab bundle, and the negative electrode coupling portion.

The maximum size A of the first insulating tape 151 in a width direction X and the maximum size B of the second insulating tape 152 in the width direction X may vary depending on the width of the electrode stack 110.

Since the size of the positive electrode 111 constituting the electrode stack 110 is the smallest and the size of the separator 112 is the largest, the lengths C1 and C3 between the outer periphery of the positive electrode and the first and second insulating tapes may be 0 mm or more, specifically 1.5 mm or more.

Each of the length D1 between the first insulating tape 151 and the lead film 140 and the length D2 between the second insulating tape 152 and the lead film 140 may be 0.08±0.75 mm.

In the longitudinal direction Y, the minimum of each of the length E1 between the end of the positive electrode tab 121 and the end of each of the first and second insulating tapes and the length E2 between the end of the negative electrode tab 122 and the end of each of the first and second insulating tapes is 0.1 mm.

When the width of the positive electrode portion 153 of the first and second insulating tapes is greater than the width G1 of the positive electrode tab 121, and the width of the negative electrode portion 154 is greater than the width G2 of the negative electrode tab 122, the minimum of each of the length F1 of each of the first and second insulating tapes extending further from the positive electrode tab 121 in the width direction X and the length F2 of each of the first and second insulating tapes extending further from the negative electrode tab 122 in the width direction X is 0.1 mm.

In addition, the thicknesses of the first insulating tape 151 and the second insulating tape 152 may be different from each other, wherein, when a V-forming portion of the electrode tab bundle is bent so as to be convex downward, as shown in FIG. 6, the thickness of the second insulating tape 152 attached to the outside of the convex portion may be greater than the thickness of the first insulating tape 151. This is to compensate for the thickness and prevent the risk of internal short circuit, since there is a greater risk of damage to the second insulating tape 152 at a part pointed due to bending.

For example, the thickness of a thinner one of the first insulating tape and the second insulating tape may be 10 µm to 50 µm, and the thickness of a thicker one may be 30 µm to 70 µm, wherein the tape attached to the convex outer surface of the V-forming portion of the electrode tab bundle may be thicker within the above range.

Each of the first insulating tape 151 and the second insulating tape 152 includes a first region 150a, which is attached to the outer surface of the electrode stack 110, and a second region 150b, which includes the positive electrode portion 153 and the negative electrode portion 154, as the remaining part excluding the first region 150a.

The first region 150a includes an extension portion 155 that extends beyond both ends of the second region 150b in the width direction X of the electrode stack 110.

Since the first insulating tape 151 and the second insulating tape 152 attached to the first region 150a may serve to compress the electrode stack 110, the inclusion of the extension portion 155 may increase the force applied to the electrode stack 110. In particular, if an outer periphery of an electrode mixture layer is gradually lowered and inclined to form a sliding portion, non-adhesion between the electrode and the separator may occur, which may increase the resistance and cause lithium precipitation. In this case, the dimensions of the extension portion 155 in the longitudinal direction Y and the width direction X may be increased to increase the force applied to the electrode stack 110.

In FIG. 4, the electrode assembly is divided into L1, L2, L3, L4, and L5 in the width direction X. (a) of FIG. 6 is a vertical sectional view of the electrode assembly cut parallel to the longitudinal direction Y of the electrode assembly at each of L1, L2, L3, L4, and L5. (b) of FIG. 6 shows the state in which the electrode tab bundle is bent to form the V-forming portion 133 and is received in the pouch-shaped battery case 201 in a bent state in the electrode assembly shown in (a) of FIG. 6.

The lithium secondary battery shown in (b) of FIG. 6 is a pouch-shaped battery cell, which includes a pouch-shaped battery case 201 configured to receive the electrode assembly therein, wherein the battery case 201 is made of a laminate sheet including a metal layer and a resin layer.

The battery case 201 includes a first case 201a and a second case 201b, wherein the first case 201a and the second case 201b may be separated from each other or may be connected to each other so as to be folded at outer peripheries thereof connected to each other.

In (b) of FIG. 6, a concave electrode assembly receiving portion 200 is formed in the second case 201b in order to receive the electrode assembly. Unlike this, the electrode assembly receiving portion may be formed in the first case 201a, and the V-forming portion 133 may be convex upward.

The outer peripheries of the first case 201a and the second case 201b are thermally fused to seal the battery case, and the V-forming portion 133 formed by bending the positive electrode tab bundle and the negative electrode tab bundle of the electrode assembly is located in the space between the electrode stack 110 and the battery case 201.

The vertical sectional views of L1 and L5 are the same, and each of (a) of FIG. 6 and (b) of FIG. 6 is a vertical sectional view of L1. The vertical sectional views of L2 and L4 are the same except that the electrodes have different polarities, and each of (a) of FIG. 6 and (b) of FIG. 6 is a vertical sectional view of L2.

The first insulating tape 151 and the second insulating tape 152 are in a form in which parts thereof added to the upper and lower parts of L3 are removed, wherein, in L3 of (a) of FIG. 6 and (b) of FIG. 6, the first insulating tape 151 and the second insulating tape 152 are spaced apart from each other, and are in the same form as L1 and L5. That is, the first insulating tape 151 and the second insulating tape 152 do not form an attachment with each other at the cut-out portion 160.

Each of the first insulating tape 151 and the second insulating tape 152 may be a cast polypropylene (hereinafter referred to as "CPP") tape, wherein the melting point of CPP is 160°C. Alternatively, the first insulating tape 151 and the second insulating tape 152 may be in the form in which an acrylic-based adhesive applied to one surface of a polypropylene layer.

In a specific example, the first insulating tape 151 and the second insulating tape 152 may include first layers 151a and 152a attached to the electrode stack 110, the positive electrode coupling portion 123, and the negative electrode coupling portion 124, and second layers 151b and 152b located on the first layers 151a and 152a, respectively, wherein each of the first layers 151a and 152a may be an adhesive layer including an adhesive material, and each of the second layers 151b and 152b may be an insulating layer.

Each of the first insulating tape and the second insulating tape may be stably attached to the electrode stack 110, the positive electrode coupling portion 123, and the negative electrode coupling portion 124 via the adhesive layer, and contact between the positive electrode and the negative electrode may be prevented by the insulating layer.

The adhesive material included in the adhesive layer may include, for example, an epoxy-based adhesive, an acrylic-based adhesive, or a cyanoacrylate-based adhesive, and an insulating material constituting the insulating layer may include, for example, at least one selected from the group consisting of silicone, mica, rubber, ceramic, and an insulating polymer including polyvinyl alcohol, polyimide, polymethylmethacrylate, or polystyrene.

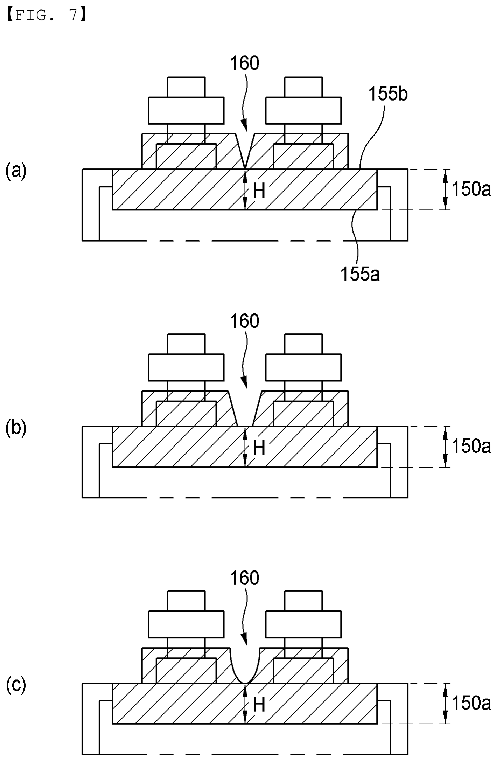

FIG. 7 is a plan view showing various shapes of the cut-out portion in the electrode assembly according to the present invention.

In the electrode assembly shown in FIG. 4, the cut-out portion 160 is rectangular or square in plan.

Referring to FIG. 7, (a) the cut-out portion 160 is triangular in plan, (b) the cut-out portion 160 is trapezoidal in plan, and (c) the cut-out portion 160 is semi-elliptical in plan.

However, the shape of the cut-out portion is not limited to those shown in the figures as long as at least one of the first insulating tape and the second insulating tape is at least partially cut out at L3.

Even with this variation in the shape of the cut-out portion 160, the shortest distance H from a first end 155a of the first region 150a in the longitudinal direction to the cut-out portion 160 is equal to the distance from a first end 155a of the extension portion in the longitudinal direction to a second end 155b, which is opposite the first end 155a.

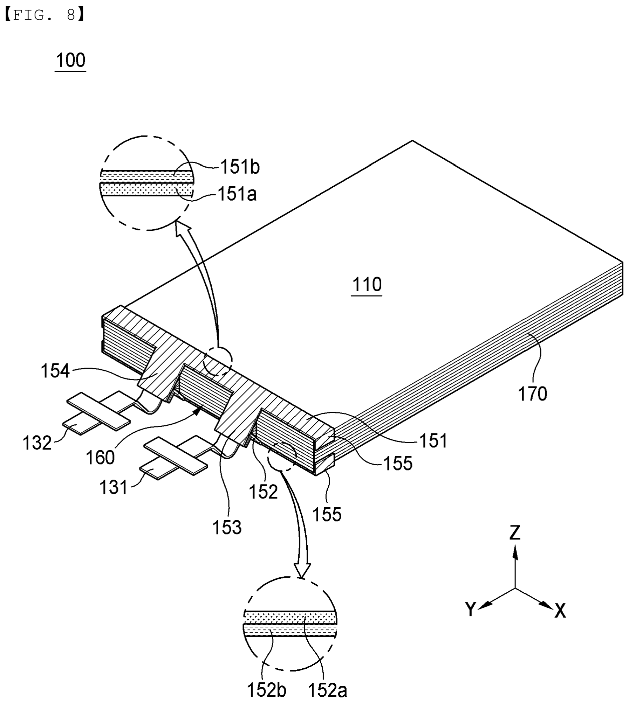

FIG. 8 is a perspective view of an electrode assembly according to a second embodiment of the present invention. Referring to FIG. 8, an extension portion 155 of a first insulating tape 151 attached to an electrode stack 110 extends downward along a side surface 170 of the electrode stack 110 in a thickness direction Z, and an extension portion 155 of a second insulating tape 152 extends upward along the side surface 170 of the electrode stack 110 in the thickness direction Z, wherein the extension portion 155 of the first insulating tape 151 and the extension portion 155 of the second insulating tape 152 do not overlap each other at the side surface 170 of the electrode stack 110.

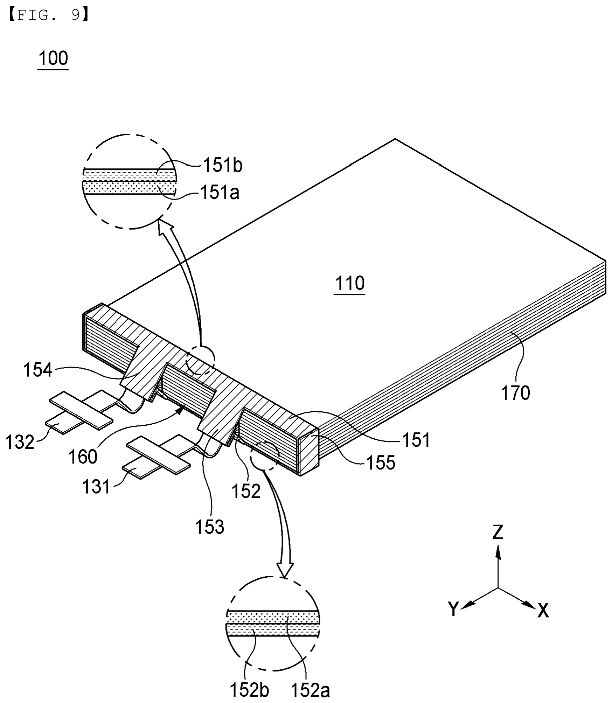

FIG. 9 is a perspective view of an electrode assembly according to a third embodiment of the present invention. Referring to FIG. 9, an extension portion 155 of a first insulating tape 151 attached to an electrode stack 110 extends downward along a side surface 170 of the electrode stack 110 in the thickness direction Z, and an extension portion 155 of a second insulating tape 152 extends upward along the side surface 170 of the electrode stack 110 in the thickness direction Z, wherein the extension portion 155 of the first insulating tape 151 and the extension portion 155 of the second insulating tape 152 overlap each other at the side surface 170 of the electrode stack 110.

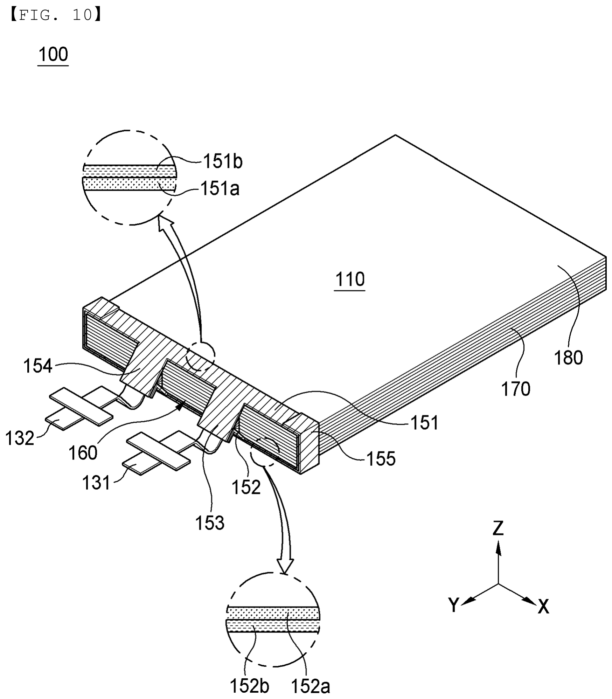

FIG. 10 is a perspective view of an electrode assembly according to a fourth embodiment of the present invention. Referring to FIG. 10, an extension portion 155 of a first insulating tape 151 passes a side surface 170 of an electrode stack 110 in the thickness direction Z and extends to a lower surface of the electrode stack 110, and an extension portion 155 of a second insulating tape 152 passes the side surface 170 of the electrode stack 110 in the thickness direction Z and extends to an upper surface 180 of the electrode stack 110, wherein the extension portion 155 of the first insulating tape 151 and the extension portion 155 of the second insulating tape 152 overlap each other at the side surface 170 of the electrode stack 110, the upper surface 170 of the electrode stack 110, and the lower surface 180 of the electrode stack 110.

At this time, the first insulating tape 151 and the second insulating tape 152 press the electrode stack 110, and if each of a positive electrode mixture layer and a negative electrode mixture layer is provided with a sliding portion having a decreasing thickness of an outer peripheral side thereof with the electrode tabs, the adhesion between electrodes and a separator at the sliding portion may be increased.

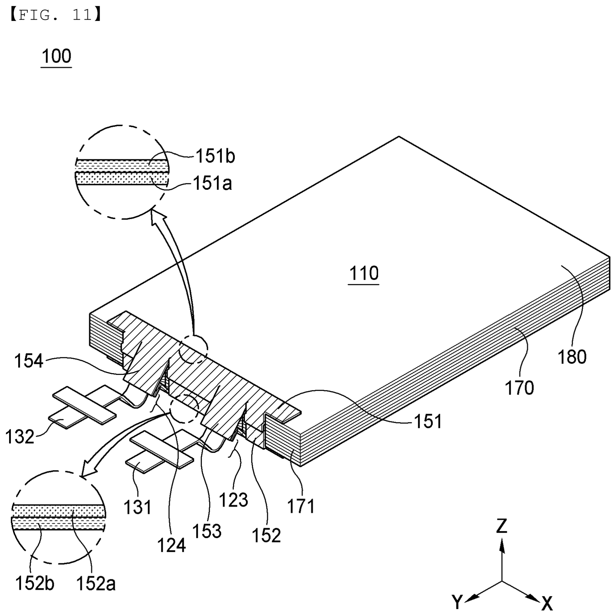

FIG. 11 is a perspective view of an electrode assembly according to a fifth embodiment of the present invention. Referring to FIG. 11, the electrode assembly 100 according to the present invention includes an electrode stack 110 constituted by a plurality of positive electrodes and a plurality of negative electrodes stacked alternately with a separator disposed therebetween, a positive electrode lead 131 coupled to a positive electrode tab bundle constituted by positive electrode tabs protruding respectively from outer peripheries of the plurality of positive electrodes and overlapping each other, a negative electrode lead 132 coupled to a negative electrode tab bundle constituted by negative electrode tabs protruding respectively from outer peripheries of the plurality of negative electrodes and overlapping each other, a first insulating tape 151 attached to at least a part of an upper surface 180 of the electrode stack 110, to an upper surface of a positive electrode coupling portion 123 where the positive electrode tab bundle and the positive electrode lead 131 are coupled to each other, to an upper surface of a negative electrode coupling portion 124 where the negative electrode tab bundle and the negative electrode lead 132 are coupled to each other, and to a side surface 171 of the electrode stack 110 between the positive electrode coupling portion 123 and the negative electrode coupling portion 124, and a second insulating tape 152 attached to at least a part of a lower surface of the electrode stack 110, to a lower surface of the positive electrode coupling portion 123 where the positive electrode tab bundle and the positive electrode lead 131 are coupled to each other, to a lower surface of the negative electrode coupling portion 124 where the negative electrode tab bundle and the negative electrode lead 132 are coupled to each other, and to the side surface 171 of the electrode stack 110 between the positive electrode coupling portion 123 and the negative electrode coupling portion 124.

The first insulating tape 151 and the second insulating tape 152 may overlap each other at the side surface 171 of the electrode stack 110 between the positive electrode coupling portion 123 and the negative electrode coupling portion 124. Alternatively, unlike what is shown in FIG. 11, the first insulating tape 151 and the second insulating tape 152 may be attached to the side surface 171 of the electrode stack 110 between the positive electrode coupling portion 123 and the negative electrode coupling portion 124 so as not to overlap each other.

At this time, the first insulating tape 151 and the second insulating tape 152 press the electrode stack 110 while wrapping an outer periphery of the side thereof from which the electrode tabs protrude, and if each of a positive electrode mixture layer and a negative electrode mixture layer is provided at the outer periphery thereof at which the electrode tabs are located with a sliding portion having a relatively small thickness, the adhesion between the electrodes and the separator at the sliding portion may be increased.

Hereinafter, the present invention will be described with reference to an example, which is provided only for easier understanding of the present invention and should not be construed as limiting the scope of the present invention.

### <Comparative Example>

An electrode stack in which a plurality of positive electrodes and a plurality of negative electrodes are alternately stacked with a separator disposed therebetween is prepared. Positive electrode tabs of the electrode stack are welded to form a positive electrode tab bundle, and a positive electrode lead is coupled thereto. Negative electrode tabs of the electrode stack are welded to form a negative electrode tab bundle, and a negative electrode lead is coupled thereto.

A first insulating tape and a second insulating tape formed as shown in FIG. 1 were attached to the electrode stack, the positive electrode tab bundle, a positive electrode coupling portion, the negative electrode tab bundle, and a negative electrode coupling portion to manufacture an electrode assembly.

The electrode assembly was received in a pouch-shaped battery case, an electrolyte solution was injected into the pouch-shaped battery case, and the pouch-shaped battery case was sealed to assemble a pouch-shaped battery cell.

Twelve pouch-shaped battery cells were manufactured by the same method as described above.

In each pouch-shaped battery cell, a temperature sensor was attached to the center of a wide outer surface of the electrode stack.

The temperature of a heating experimental chamber was set to 130°C, the 12 pouch-shaped battery cells were placed in the heating experimental chamber, and the temperature change of each temperature sensor was measured for 30 minutes.

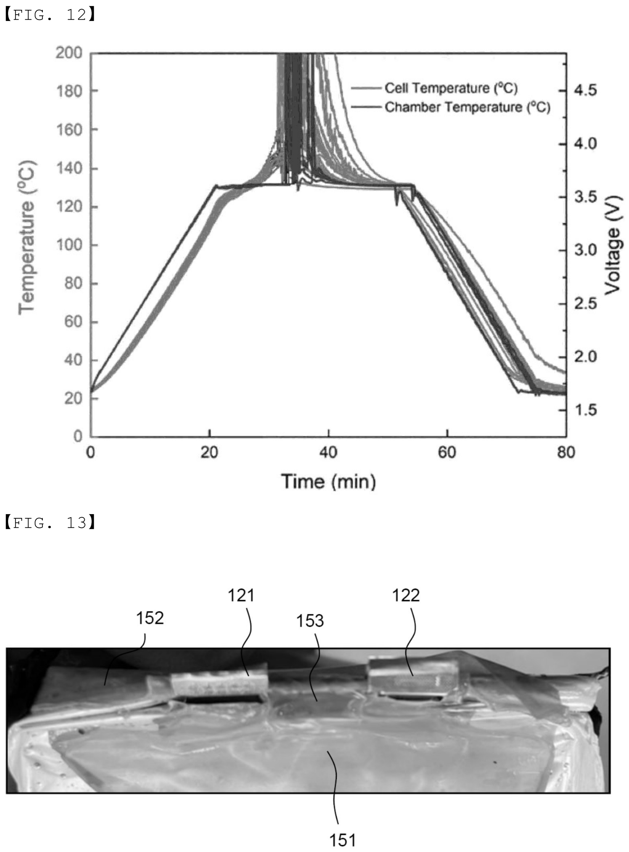

FIG. 12 is a graph showing temperature change over time of the comparative example.

Referring to FIG. 12, the temperature of the heating experimental chamber and the temperature of the battery cells increased to about 120°C to 130°C over time, and the temperature of five pouch-shaped battery cells and the temperature of the heating experimental chamber increased sharply to 200°C when about 30 minutes passed.

FIG. 13 is a photograph showing the result of the comparative example.

FIG. 13 is a photograph of an electrode assembly receiving portion and a sealed portion of the pouch-shaped battery case after disassembling the pouch-shaped battery cell and removing the electrode stack.

Referring to FIG. 13, it can be seen that the first insulating tape 151 and the second insulating tape 152 were strongly fused between the positive electrode tab 121 and the negative electrode tab 122 to form a fused portion 153. As such, it can be expected that fusion of the first insulating tape and the second insulating tape blocked a venting portion of the pouch-shaped battery cell, resulting in thermal runaway as shown in FIG. 12.

### <Example>

Twenty pouch-shaped battery cells were manufactured using the same method as in the comparative example, except that a first insulating tape and a second insulating tape formed as shown in FIG. 4 were used in an electrode assembly, and a heating experiment was conducted under the same conditions as in the comparative example.

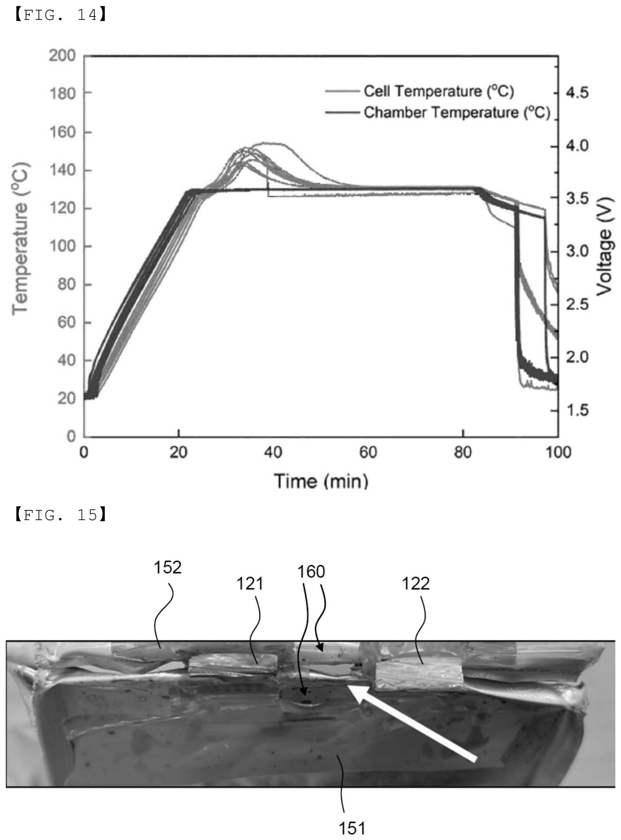

FIG. 14 is a graph showing temperature change over time of the example.

Referring to FIG. 14, the temperature of the heating experimental chamber rises to 130°C over time and remains constant.

The temperature of the battery cells rose to higher temperatures than the temperature of the heating experimental chamber, but the maximum temperature of the 20 pouch-shaped battery cells was about 150°C, and all of the 20 pouch-shaped battery cells remained the same as the temperature of the heating experimental chamber after the maximum temperature.

FIG. 15 is a photograph showing the result of the example.

FIG. 15 is a photograph taken under the same conditions as FIG. 13.

Referring to FIG. 15, each of the first insulating tape 151 and the second insulating tape 152 is provided with a cut-out portion 160, and therefore the first insulating tape 151 and the second insulating tape 152 are not present between the positive electrode tab 121 and the negative electrode tab 122.

When the temperature reaches 130°C, which is the melting point of the adhesive layer of the pouch-shaped battery case, venting of the pouch-shaped battery cell starts, and the venting portion is not blocked since there is no fused portion. Therefore, it can be expected that smooth gas discharge has been achieved. In addition, a thermal runaway phenomenon as in the comparative example did not occur.

Those skilled in the art to which the present invention pertains will appreciate that various applications and modifications are possible within the category of the present invention based on the above description.

### (Description of Reference Symbols)

100: Electrode assembly
110: Electrode stack
111: Positive electrode
112: Separator
121: Positive electrode tab
122: Negative electrode tab
123: Positive electrode coupling portion
124: Negative electrode coupling portion
131: Positive electrode lead
132: Negative electrode lead
133: V-forming portion
140: Lead film
150a: First region
150b: Second region
151: First insulating tape
151a, 152a: First layers
151b, 152b: Second layers
152: Second insulating tape
153: Fused portion
153: Positive electrode portion
154: Negative electrode portion
155: Extension portion
155a: First end
155b: Second end
160: Cut-out portion
170, 171: Side surfaces
180: Upper surface
200: Electrode assembly receiving portion
201: Pouch-shaped battery case
201a: First case
201b: Second case

## Claims

1. An electrode assembly comprising:
an electrode stack constituted by a plurality of positive electrodes and a plurality of negative electrodes stacked alternately with a separator disposed therebetween;
a positive electrode lead coupled to a positive electrode tab bundle constituted by positive electrode tabs protruding respectively from outer peripheries of the plurality of positive electrodes and overlapping each other;
a negative electrode lead coupled to a negative electrode tab bundle constituted by negative electrode tabs protruding respectively from outer peripheries of the plurality of negative electrodes and overlapping each other;
a first insulating tape attached to at least a part of an upper surface of the electrode stack, to an upper surface of a positive electrode coupling portion where the positive electrode tab bundle and the positive electrode lead are coupled to each other, and to an upper surface of a negative electrode coupling portion where the negative electrode tab bundle and the negative electrode lead are coupled to each other; and
a second insulating tape attached to at least a part of a lower surface of the electrode stack, to a lower surface of the positive electrode coupling portion where the positive electrode tab bundle and the positive electrode lead are coupled to each other, and to a lower surface of the negative electrode coupling portion where the negative electrode tab bundle and the negative electrode lead are coupled to each other, wherein
the positive electrode tab bundle and the negative electrode tab bundle are formed at the same outer periphery so as to be spaced apart from each other, and
at least one of the first insulating tape and the second insulating tape includes a cut-out portion formed such that at least a part between a positive electrode portion attached to the positive electrode coupling portion and a negative electrode portion attached to the negative electrode coupling portion is removed.

2. The electrode assembly according to claim 1, wherein the cut-out portion comprises a first cut-out portion formed in the first insulating tape and a second cut-out portion formed in the second insulating tape.

3. The electrode assembly according to claim 2, wherein the cut-out portion is formed in any one selected from a group consisting of a rectangular shape, a square shape, a triangular shape, a trapezoidal shape, a semicircular shape, or a semi-elliptical shape in plan.

4. The electrode assembly according to claim 1, wherein
a width of the positive electrode portion of each of the first insulating tape and the second insulating tape is greater than a width of the positive electrode tab, and
a width of the negative electrode portion of each of the first insulating tape and the second insulating tape is greater than a width of the negative electrode tab.

5. The electrode assembly according to claim 4, wherein
each of the first insulating tape and the second insulating tape comprises a first region attached to an outer surface of the electrode stack and a second region comprising the positive electrode portion and the negative electrode portion as a remaining part excluding the first region, and
the first region comprises an extension portion extending beyond both ends of the second region in a width direction of the electrode stack.

6. The electrode assembly according to claim 5, wherein a shortest distance from a first end of the first region in a longitudinal direction to the cut-out portion is equal to a distance from a first end of the extension portion in the longitudinal direction to a second end of the extension portion opposite the first end of the extension portion.

7. The electrode assembly according to claim 5, wherein
an extension portion of the first insulating tape extends downward along a side surface of the electrode stack in a thickness direction,
an extension portion of the second insulating tape extends upward along the side surface of the electrode stack in the thickness direction, and
the extension portion of the first insulating tape and the extension portion of the second insulating tape do not overlap each other at the side surface of the electrode stack.

8. The electrode assembly according to claim 5, wherein
an extension portion of the first insulating tape extends downward along a side surface of the electrode stack in a thickness direction,
an extension portion of the second insulating tape extends upward along the side surface of the electrode stack in the thickness direction, and
the extension portion of the first insulating tape and the extension portion of the second insulating tape overlap each other at the side surface of the electrode stack.

9. The electrode assembly according to claim 5, wherein
an extension portion of the first insulating tape passes a side surface of the electrode stack in a thickness direction and extends to a lower surface of the electrode stack,
an extension portion of the second insulating tape passes the side surface of the electrode stack in the thickness direction and extends to an upper surface of the electrode stack, and
the extension portion of the first insulating tape and the extension portion of the second insulating tape overlap each other at the side surface of the electrode stack, the upper surface of the electrode stack, and the lower surface of the electrode stack.

10. The electrode assembly according to claim 1, wherein
each of the first insulating tape and the second insulating tape comprises a first layer attached to the electrode stack, the positive electrode coupling portion, and the negative electrode coupling portion, and a second layer located on the first layer, and
the first layer is an adhesive layer comprising an adhesive material, and the second layer is an insulating layer.

11. An electrode assembly comprising:
an electrode stack constituted by a plurality of positive electrodes and a plurality of negative electrodes stacked alternately with a separator disposed therebetween;
a positive electrode lead coupled to a positive electrode tab bundle constituted by positive electrode tabs protruding respectively from outer peripheries of the plurality of positive electrodes and overlapping each other;
a negative electrode lead coupled to a negative electrode tab bundle constituted by negative electrode tabs protruding respectively from outer peripheries of the plurality of negative electrodes and overlapping each other;
a first insulating tape attached to at least a part of an upper surface of the electrode stack, to an upper surface of a positive electrode coupling portion where the positive electrode tab bundle and the positive electrode lead are coupled to each other, to an upper surface of a negative electrode coupling portion where the negative electrode tab bundle and the negative electrode lead are coupled to each other, and to a side surface of the electrode stack between the positive electrode coupling portion and the negative electrode coupling portion; and
a second insulating tape attached to at least a part of a lower surface of the electrode stack, to a lower surface of the positive electrode coupling portion where the positive electrode tab bundle and the positive electrode lead are coupled to each other, to a lower surface of the negative electrode coupling portion where the negative electrode tab bundle and the negative electrode lead are coupled to each other, and to the side surface of the electrode stack between the positive electrode coupling portion and the negative electrode coupling portion.

12. The electrode assembly according to claim 11, wherein the first insulating tape and the second insulating tape overlap each other at the side surface of the electrode stack between the positive electrode coupling portion and the negative electrode coupling portion.

13. A lithium secondary battery comprising:
the electrode assembly according to any one of claims 1 to 12; and
a battery case configured to receive the electrode assembly therein, wherein
the battery case comprises a first case and a second case, each of the first case and the second case being made of a laminate sheet comprising a metal layer and a resin layer,
an electrode assembly receiving portion is formed in at least one of the first case and the second case,
outer peripheries of the first case and the second case are thermally fused to each other to seal the battery case, and
the positive electrode tab bundle and the negative electrode tab bundle of the electrode assembly are bent in a space between the electrode stack and the battery case to form a V-forming portion.

14. The lithium secondary battery according to claim 13, wherein a thicker one of the first insulating tape and the second insulating tape is attached to an outside of the V-forming portion.

15. A battery pack comprising the lithium secondary battery according to claim 13 as a unit cell.
